# EUROPÄISCHE PATENTSCHRIFT

(11) **EP 4 088 581 B1**
(45) Veröffentlichungstag und Bekanntmachung des Hinweises auf die Patenterteilung: **01.11.2023**
(21) Anmeldenummer: 22172975.9
(22) Anmeldetag: 12.05.2022
(51) Int. Cl.: A22C 11/10

(54) **TRENNVORRICHTUNG ZUM TRENNEN VON PORTIONEN AUS MIT LEBENSMITTEL-MASSE BEFÜLLTEN, LÄNGLICHEN HÜLLEN SOWIE BETREFFENDES VERFAHREN**
SEPARATING DEVICE FOR SEPARATING PORTIONS OF ELONGATED CASINGS FILLED WITH FOOD MATERIAL AND RELATED METHOD
DISPOSITIF DE SÉPARATION PERMETTANT DE SÉPARER DES PORTIONS DES ENVELOPPES OBLONGUES REMPLIES DE MASSE ALIMENTAIRE, AINSI QUE PROCÉDÉ CORRESPONDANT

(30) Priorität: 12.05.2021 DE 102021112517
(43) Veröffentlichungstag der Anmeldung: 16.11.2022
(73) Patentinhaber: VEMAG Maschinenbau GmbH, 27283 Verden/Aller (DE)
(72) Erfinder: Knodel, Peter, 28876 Oyten (DE)
(74) Vertreter: Eisenführ Speiser

(56) Entgegenhaltungen:
- EP-B1- 0 941 662
- WO-A1-2017/081648
- DE-B3-102021 112 513
- US-B1- 6 482 079
- US-B1- 10 076 122

## Beschreibung

Die Erfindung betrifft eine Trennvorrichtung zum Trennen von Portionen aus mit Lebensmittel-Masse befüllten länglichen Hüllen, insbesondere von Würstchen aus mit Wurstbrät gefüllten Alginat-Hüllen, mit zwei beabstandet zueinander angeordneten, mittels mindestens eines Antriebs antreibbaren umlaufenden Transportelementen, die jeweils einen Transportbereich aufweisen, welcher im Betrieb in eine Transportrichtung bewegt wird, und einen Rücklaufbereich, wobei die gefüllte Hülle zwischen die Transportbereiche der beiden Transportelemente eingebracht und in Transportrichtung transportiert werden kann, und wobei die Transportelemente derart ausgerichtet sind, dass sich der Abstand zwischen den Transportelementen in dem Transportbereich in Richtung der Transportrichtung reduziert, mindestens einem an jedem Transportelement angeordneten seitlich von dem Transportelement abstehenden Crimpelement, wobei zwei Crimpelemente der beabstandeten Transportelemente im Transportbereich nebeneinander angeordnet sind sowie bei Bewegung in die Transportrichtung aufeinander zu und zumindest teilweise aneinander vorbei bewegt werden, wobei das Crimpelement ein Befestigungsabschnitt zum Befestigen des Crimpelements an dem Transportelement aufweist und einem benachbart zu dem Befestigungsabschnitt angeordneten Crimpabschnitt, wobei der Crimpabschnitt sich ausgehend von einem Grundabschnitt öffnende Schenkel aufweist.

Bei bekannten Vorrichtungen und Verfahren zur Herstellung von Würstchen werden mithilfe einer Pumpe oder einer Füllmaschine und Portioniervorrichtung Kunst- oder Naturdärme mit pastöser Masse, wie beispielsweise Fleischbrät befüllt und portioniert, sowie anschließend in einzelne Würstchen abgeteilt; auf gleiche Weise werden auch andere Massen in eine Hülle gefüllt. Die Masse wird meist durch eine Füllmaschine mit Fülltrichter und Förderpumpe bereitgestellt.

Bei einer Art von bekannten Verfahren wird mittels einer Abdreheinrichtung und der Portioniervorrichtung eine Abdrehstelle in der Darm-Hülle erzeugt, welche einzelne Portionen von Würstchen voneinander abgrenzt. Bei einer anderen Art von gattungsgemäßen Portioniervorrichtung findet keine Abdrehung von Würstchen-Portionen statt, sondern die Hülle wird um einen Strang der Lebensmittel-Masse herum in flüssiger Form co-extrudiert. Die Hülle, die häufig aus Alginat hergestellt wird, verfestigt sich. Nach dem Herstellen einer solchen befüllten Hülle dringen während des Weitertransports sogenannte Precrimpelemente in die mit Lebensmittel-Masse gefüllte Hülle ein und verdrängen sowohl die Lebensmittel-Masse als auch die Hülle, sodass eine Einschnürstelle entsteht. In Abständen von etwa der Länge eines Würstchens sind zu diesem Zweck an den Förderelementen seitlich abstehende Precrimpelemente angeordnet, die jeweils paarweise mit einem im Betrieb gegenüberliegenden Precrimpelement des benachbarten beabstandeten Förderelements zusammenlaufen und dabei die in der befüllten Darm-Hülle befindliche Masse zusammen mit der Hülle im Bereich einer Einschnürstelle einschnüren.

Anschließend erfolgt ein Abteilen der Würstchenportion mithilfe sogenannter Crimpelemente. Die Crimpelemente sind ebenfalls in Abständen von etwa der Länge eines Würstchens an Förderelementen angeordnet. Die aus dem Stand der Technik vorbekannten Crimpelemente weisen einen Befestigungsabschnitt zum Befestigen des Crimpelements an dem Transportelement auf und einen benachbart zu dem Befestigungsabschnitt angeordneten flach ausgebildeten Crimpabschnitt. Der Crimpabschnitt weist zwei sich ausgehend von einem Grundabschnitt öffnende Schenkel auf. Wenngleich durch die soeben bezeichnete Ausbildung der Crimpabschnitte ein sicheres Abtrennen der Würstchenportionen sichergestellt wird, besteht dennoch Raum für Verbesserungen.

So ist gelegentlich in der Praxis beobachtet worden, dass die Enden der Portionen bzw. Würstchen an den Trennstellen nicht vollständig ausgeformt sind. Beispielsweise können die Wurstenden eine nichtrunde Ausbildung aufweisen, welche sodann in einem nachfolgenden Kochprozess durch Schrumpfen der Wurst weiter ausgeprägt werden kann. Eine solche ungleichmäßige bzw. unrunde Ausbildung der Wurstenden wird gelegentlich durch den Verbraucher als unerwünscht wahrgenommen.

Aus WO 2017/081648 A1 ist eine Trennvorrichtung für Würstchen bekannt. US 10,076,122 B1 betrifft ebenfalls eine Trennvorrichtung zum Trennen von Würstchen.

Die Erfindung möchte eine Trennvorrichtung der eingangs genannten Art auf vorteilhafte Weise weiterbilden, derart, dass die im Stand der Technik aufgefundenen Nachteile möglichst behoben werden. Insbesondere soll eine Vorrichtung angegeben werden, die eine runde und gleichmäßige Ausbildung der Portionsenden ermöglicht. Erfindungsgemäß wird die Aufgabe bei einer Vorrichtung der eingangs genannten Art dadurch gelöst, dass die Schenkel auf ihrer im Betrieb einem benachbart angeordneten zweiten Crimpelement abgewandten Seite konvex gewölbt ausgebildet sind, sodass die gefüllte Hülle unter Verdrängung der Masse in einem Einschnürbereich zunächst eingeschnürt und anschließend durchtrennt wird (Anspruch 1).

Die Erfindung macht sich die Erkenntnis zunutze, dass durch die Wölbung der Crimpelemente die Wurstmasse während der Relativbewegung der gegenüber angeordneten Crimpelemente aufeinander zu und zumindest teilweise aneinander vorbei zunächst über die eigentlich zu erzeugende Form, nämlich die runde Ausbildung der Wurstenden, hinaus verdrängt wird, damit sich nachdem Entspannen bzw. Rückströmen der Masse eine runde Form am Wurstende ausbilden kann. Auf vorteilhafte Weise kann durch die gewölbte Ausbildung der Crimpelemente auch dann noch ein rundes Portionsende ausgeformt werden, wenn die Wurst nach dem Trennen einem Kochprozess unterzogen wird und einem Schrumpfen unterliegt. Es lassen sich somit optisch ansprechend und gleichmäßig ausgebildete Würstchenportionen erzeugen.

Die Erfindung wird dadurch gekennzeichnet, dass die Wölbung als konvexe Wölbung ausgebildet ist. Die konvexe Wölbung erstreckt sich vorzugsweise über die gesamte Breite des Crimpelements quer zur Transportrichtung gesehen. Die konvexe Wölbung hat sich als besonders vorzugswürdig erwiesen zur Ausbildung der runden bzw. nahezu runden Portionsenden der Würstchen.

Gemäß einer bevorzugten Ausführungsform weist auch der Grundabschnitt eine Wölbung auf, welche insbesondere als konvexe Wölbung ausgebildet ist. Vorzugsweise weisen sowohl die Schenkel als auch der Grundabschnitt eine gemeinsame konvexe Wölbung auf, wobei die Wölbungen knickfrei, d.h. mathematisch stetig, ineinander übergehen. Mit anderen Worten sind die Schenkel nach der Art einer Hose ausgebildet, wobei die Schenkel gewissermaßen Hosenbeine darstellen. Die Hose weist insoweit eine konvexe Grundform auf.

Gemäß einer bevorzugten Ausführungsform ist auf der Innenseite der Schenkel eine Schneide ausgebildet. Die Schneide ist vorzugsweise derart ausgebildet, dass ein sicheres Durchtrennen der Würstchenportion sichergestellt wird, ohne aber die Hülle während der Verdrängung der Wurstmasse zu beschädigen.

Gemäß einer bevorzugten Ausführungsform ist das Crimpelement aus einem der folgenden Werkstoffe ausgebildet oder besteht daraus: Metall, Polyoxymethylen (POM). Die betreffenden Werkstoffe haben sich als besonders geeignet zur Ausbildung der Crimpelemente erwiesen. Beispielsweise kann die Werkstoffauswahl erfolgen anhand der zu verarbeitenden Wurstdurchmesser bzw. Wurstkaliber oder auch anhand des verwendeten Hüllenmaterials oder der Hüllenmaterialdicke.

Die Erfindung wird dadurch weitergebildet, dass die Crimpelemente derart relativ zu den Transportelementen ausgerichtet sind, dass die Crimpelemente in dem Transportbereich parallel zueinander geführt werden. Auf diese Weise wird sichergestellt, dass trotz der aufeinander zulaufenden Ausrichtung der Transportelemente in Transportrichtung sichergestellt wird, dass die Crimpelemente parallel benachbart zueinander geführt werden können.

Gemäß einer bevorzugten Ausführungsform weisen die Transportelemente Aufnahmemittel zur Aufnahme der Befestigungsabschnitte der Crimpelemente auf. Die Aufnahmemittel der Transportelemente sind insbesondere derart ausgebildet, dass die Crimpelemente auf einfache Weise ausgetauscht werden können und gleichzeitig im Betrieb eine sichere und haltbare Verbindung mit den Transportelementen eingehen. Auf diese Weise wird eine einfache Anpassung der Trennvorrichtung an unterschiedliche Wurstkaliber oder auch Hüllenmaterialien ermöglicht und auch im Falle eines Verschleißes ein einfacher Austausch der Crimpelemente ermöglicht.

Gemäß einer bevorzugten Ausführungsform weist der gewölbte Bereich eine Dicke, in Transportrichtung betrachtet, von 5 mm bis 20 mm auf sowie eine Höhe, senkrecht zur Transportrichtung betrachtet, von insbesondere 60 mm auf.

Der Dickenbereich des gewölbten Bereiches hat sich als besonders geeignet erwiesen, die runde bzw. nahezu runde Ausformung der Portionsenden zu fördern. Die betreffende Dicke ist derart zu verstehen, dass die Wölbung, insbesondere die konvexe Wölbung, die betreffende Dicke in Richtung der Transportrichtung bzw. entgegen der Transportrichtung, je nach Ausrichtung der Crimpelemente, aufweist, und sich die Wölbung insbesondere über den vollständigen Dickenbereich des Crimpelementes erstreckt.

Die Erfindung wird dadurch weitergebildet, dass der Öffnungswinkel zwischen den Schenkeln 15 ° bis 120 ° beträgt. Durch den oben genannten Öffnungswinkelbereich wird zum einen sichergestellt, dass die Wurstportionen sicher abgetrennt werden und zum anderen die Verdrängung der Wurstmasse erleichtert.

Die Erfindung ist vorstehend unter Bezugnahme auf eine Trennvorrichtung beschrieben worden. In einem weiteren Aspekt betrifft die Erfindung ein Crimpelement für eine Trennvorrichtung zum Trennen von Portionen aus mit Lebensmittel-Masse befüllten, länglichen Hüllen, insbesondere von Würstchen aus mit Wurstbrät gefüllten Alginat-Hüllen, welches einen Befestigungsabschnitt zum Befestigen an einem bewegbaren Transportelement aufweist und einen benachbart zu dem Befestigungsabschnitt angeordneten Crimpabschnitt, wobei der Crimpabschnitt zwei sich ausgehend von einem Grundabschnitt öffnende Schenkel aufweist.

Die Erfindung löst die eingangs bezeichnete Aufgabe in Bezug auf das Crimpelement, indem die Schenkel auf ihrer im Betrieb einem benachbart angeordneten zweiten Crimpelement abgewandten Seite konvex gewölbt ausgebildet sind, sodass die gefüllte Hülle unter Verdrängung der Masse in einem Einschnürbereich zunächst eingeschnürt und anschließend durchtrennt wird.

Vorzugsweise ist das Crimpelement gemäß mindestens einem der kennzeichnenden Merkmale der vorstehenden Ausführungsbeispiele ausgebildet. Das Crimpelement macht sich somit die gleichen Vorteile und bevorzugten Ausführungsformen zunutze, wie die erfindungsgemäße Trennvorrichtung und umgekehrt. Diesbezüglich wird auf die obigen Ausführungen verwiesen und deren Inhalt und deren Inhalt hier mit einbezogen.

In einem weiteren Aspekt betrifft die Erfindung ein Verfahren gemäß Anspruch 12 zum Trennen und Ausbilden von Portionen aus mit Lebensmittel-Masse befüllten länglichen Hüllen, insbesondere von Würstchen aus mit Wurstbrät gefüllten Alginat-Hüllen, bei dem Lebensmittel-Masse mittels einer Füllmaschine in die zu befüllende Hülle eingefüllt, die befüllte Hülle mittels einer Trennvorrichtung in eine Transportrichtung transportiert wird, wobei die befüllte Hülle zwischen zwei antreibbare, umlaufende Transportelemente gebracht und mittels zweier benachbart angeordneter, jeweils an einem Transportelement angeordneter Crimpelemente in einem Einschnürbereich eingeschnürt und abgetrennt wird.

Die Erfindung löst die eingangs bezeichnete Aufgabe in Bezug auf das Verfahren, indem die Crimpelemente derart konvex gewölbt ausgebildet sind, dass die Masse über die zu erzeugende Würstchenform hinaus verdrängt wird, sodass es sich nach dem Entspannen bzw. Rückströmen der Masse eine runde Form an den Enden der Wurst ausbildet.

Die Erfindung wird dadurch weitergebildet, dass die Trennvorrichtung nach einem der vorstehenden Ausführungsbeispielen ausgebildet ist. Das Verfahren macht sich die gleichen Vorteile und bevorzugten Ausführungsformen zunutze, wie die erfindungsgemäße Trennvorrichtung und das Erfindungsgemäße Crimpelement und umgekehrt. Diesbezüglich wird auf die obigen Ausführungen verwiesen und deren Inhalt hier mit einbezogen.

Die Erfindung wird nachstehend anhand eines Ausführungsbeispieles unter Bezugnahme auf die Figuren näher erläutert, es zeigen:
- Figur 1: eine Anordnung zum Herstellen von Portionen aus einer mit Lebensmittel-Masse gefüllten Hülle umfassend eine Füllmaschine und eine Portioniervorrichtung sowie eine Trennvorrichtung in einer Seitenansicht,
- Figur 2: eine erfindungsgemäße Trennvorrichtung in einer perspektivischen Ansicht;
- Figuren 3-5: detaillierte Ansichten der erfindungsgemäßen Trennvorrichtung in unterschiedlichen Betriebszuständen in perspektivischen Ansichten;
- Figur 6a,b: Würstchen-Portionen, welche durch die erfindungsgemäße Trennvorrichtung ausgebildet werden, in Seitenansichten;
- Figuren 7-9: erfindungsgemäße Crimpelemente in unterschiedlichen Ansichten.

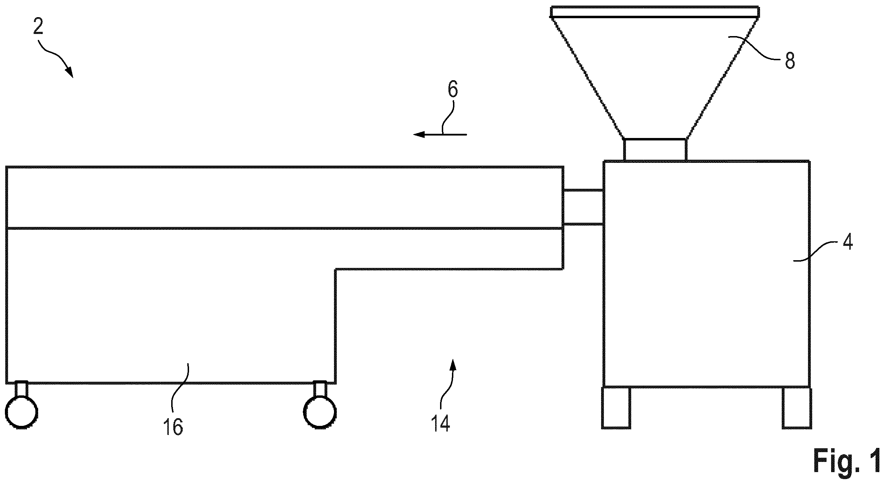

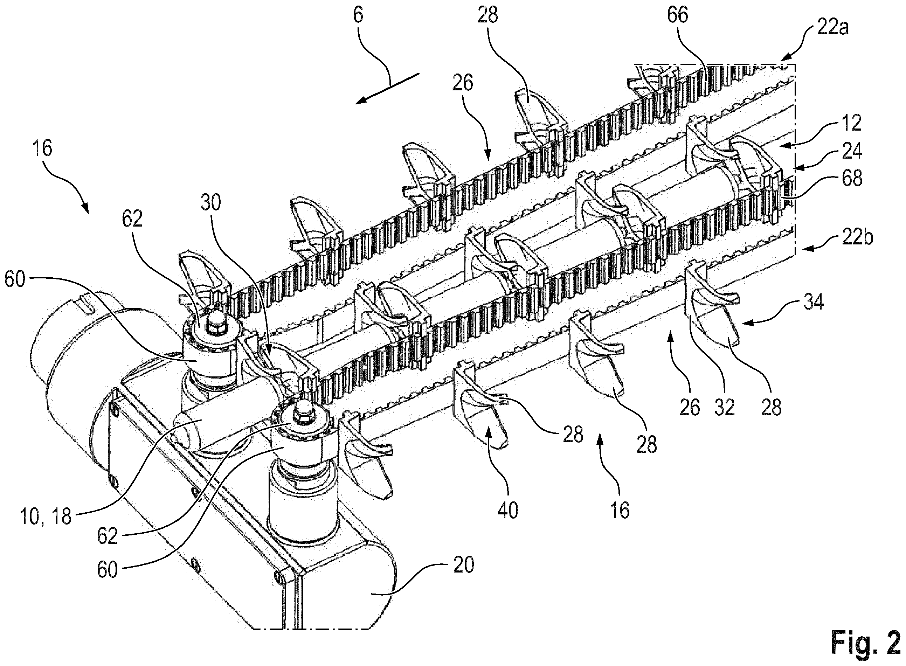

Figur 1 zeigt eine Anordnung 2 zum Herstellen von Portionen 10 (nicht gezeigt, vgl. Fig. 2) aus einer mit Masse, insbesondere pastöser Lebensmittel-Masse, gefüllten Hülle 18 (nicht gezeigt, vgl. Fig. 2), welche eine Füllmaschine 4 mit einem Fülltrichter 8 zum Aufnehmen der Lebensmittel-Masse, und eine Portioniervorrichtung 14 sowie einer Trennvorrichtung 16 aufweist.

Innerhalb der Portioniervorrichtung 14, welche in den Figuren nicht näher detailliert ist, erfolgt eine sogenannte Co-Extrusion, im Rahmen derer die Hülle 18, beispielsweise eine Alginat-Hülle 18, um einen Strang der Lebensmittel-Masse herum in flüssiger Form aufgebracht wird. In der Portioniervorrichtung 14 erfolgt sodann ferner ein Portionieren der mit Lebensmittel-Masse gefüllten Hülle 18, beispielsweise unter Verwendung sogenannter Precrimpelemente, welche in die Hülle eingreifen und sowohl die Lebensmittel-Masse als auch die Hülle 18 verdrängen.

Die gefüllten Hüllen 18, auch als Wurstrang 12 bezeichnet, gelangen sodann in Transportrichtung 6 gesehen, in den Einflussbereich einer Trennvorrichtung 16, welche in Figur 2 näher detailliert ist.

Die Trennvorrichtung 16 ist dazu ausgebildet, Würstchen-Portionen 10 aus dem Wurststrang 12 auszubilden. Die Trennvorrichtung 16 weist zwei beabstandet zueinander angeordnete umlaufende Transportelemente 22a, 22b auf. Die Transportelemente 22a, 22b sind mittels eines Antriebs 20 antreibbar. Die Transportelemente 22a, 22b weisen jeweils einen Transportbereich 24 auf, welcher im Betrieb in eine Transportrichtung 6 bewegt wird. Die umlaufenden Transportelemente 22a, 22b weisen darüber hinaus einen Rücklaufbereich 26 auf. Gefüllte Hüllen 18 werden zwischen die Transportbereiche 24 der beiden Transportelemente 22a, 22b eingebracht und in Transportrichtung 6 transportiert. Die Transportelemente 22a, 22b sind derart ausgerichtet, dass sich der Abstand zwischen den Transportelementen 22a, 22b in dem Transportbereich 24 in Richtung der Transportrichtung 6 reduziert.

An jedem der Transportelemente 22a, 22b sind seitlich abstehend von dem Transportelement 22a, 22b Crimpelemente 28 angeordnet. Jeweils zwei Crimpelemente 28 von jeweils einem der Transportelemente 22a, 22b sind dabei nebeneinander angeordnet. Aufgrund der Ausrichtung der Transportelemente 22a, 22b relativ zueinander bewegen sich die Crimpelemente 28 aufeinander zu, wenn die Transportelemente 22a, 22b in Transportrichtung 6 bewegt werden. Mit anderen Worten werden die Crimpelemente 28 parallel zueinander aufeinander zu und teilweise aneinander vorbei bewegt, wenn sich die Transportelemente 22a, 22b in Transportrichtung 6 bewegen.

Die Crimpelemente 28 weisen jeweils einen Befestigungsabschnitt 32 zum Befestigen der Crimpelemente 28 an dem Transportelement 22a, 22b auf. Benachbart zu dem Befestigungsabschnitt 32 ist ein Crimpabschnitt 34 angeordnet. Die Crimpelemente 28 sind auf einer dem jeweilig benachbart angeordneten Crimpelement 28 abgewandten Seite mit einer Wölbung 40 versehen. Hierdurch wird die gefüllte Hülle 18 unter Verdrängung der Füllmasse in einem Einschnürbereich 30 zunächst eingeschnürt und anschließend durchtrennt.

Die Crimpelemente 28 sind derart relativ zu den Transportelementen 22a, 22b ausgerichtet, dass die Crimpelemente 28 in dem Transportbereich 24 aneinander angrenzend und parallel zueinander geführt werden. Die Transportelemente 22a, 22b weisen jeweils ein Transportband 66, 68 auf. Die Transportbänder 66, 68 werden über einen Zahnriemenantrieb 62 angetrieben. Zwischen dem Transportbereich 24 und dem Rücklaufbereich 26 befindet sich ein Umlenkbereich 60.

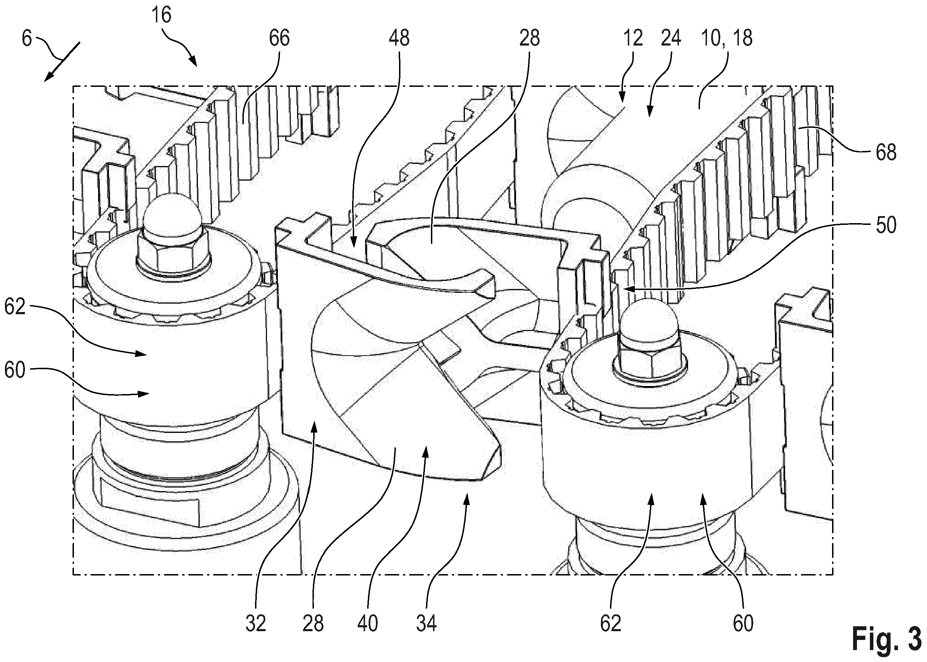

Figur 3 zeigt eine Detailansicht der Trennvorrichtung 16. Wie bereits unter Bezugnahme auf Figur 2 beschrieben worden ist, werden die Transportbänder 66, 68 jeweils mittels eines Zahnriemenantriebs 62 angetrieben. Die in Figur 3 sichtbaren Zahnriemenantriebe 62 sind im Bereich des Umlenkbereiches 60 angeordnet. Die Transportbänder 66, 68 weisen Aufnahmemittel 50 auf, in denen Crimpelemente 28, insbesondere Befestigungsabschnitt 32 der Crimpelemente 28, angeordnet sind.

In dem in der Figur 3 gezeigten Zustand sind die gegenüberliegend und benachbart zueinander geführten Crimpelemente 28 bereits derart relativ zueinander verschoben worden, dass zwischen den benachbarten Crimpelemente 28 lediglich ein reduzierter, hier rautenförmiger offener Querschnitt verbleibt. Durch den offenen Querschnitt erstreckt sich im Betrieb der Einschnürbereich 30 der Würstchen-Portion 10, was hier allerdings nicht dargestellt ist.

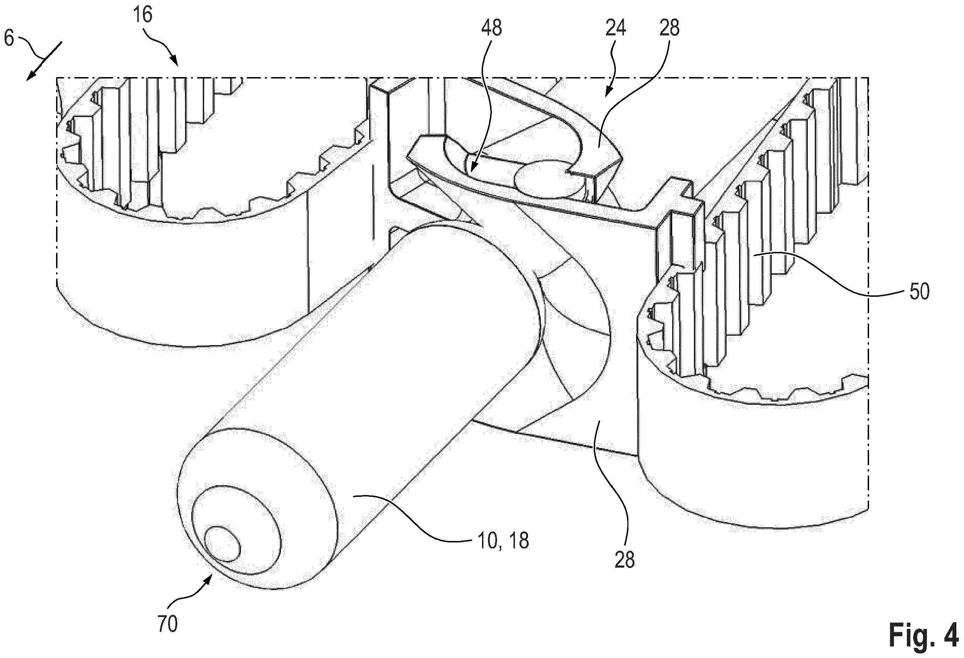

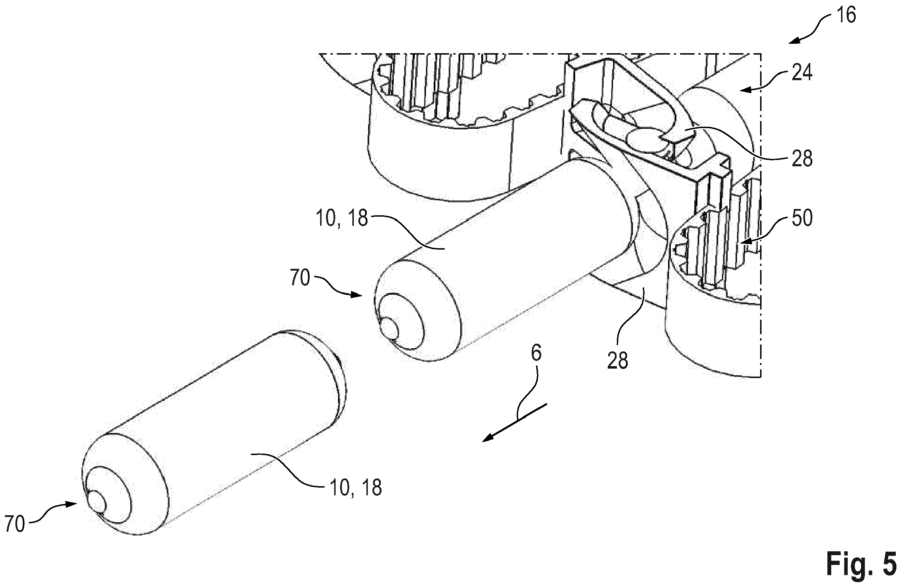

Durch die fortschreitende Bewegung der Crimpelemente 28 weiter in Richtung der Transportrichtung 6 werden die Crimpelemente 28 weiter relativ zueinander in Richtung des jeweils schräg gegenüberliegenden Crimpelementes 28 bewegt, wodurch der freie Querschnitt weiter reduziert wird, und schließlich ein Abtrennen der Würstchen-Portion 10 erfolgt. Ein solcher Zustand kurz vor dem Abtrennen der Würstchen-Portion 10 ist in Figur 4 gezeigt. Aus Figur 4 ist darüber hinaus erkennbar, dass die Würstchen-Portion 10 durch die Form des hier im Vordergrund angeordneten Crimpelementes 28 über die zu erzeugende Form hinaus verdrängt wird. Dies hat zur Folge, dass sich zunächst ein sogenanntes felgenförmiges Wurstende 70 ausbildet. Zwei Würstchen-Portionen 10 mit derartigen felgenförmigen Wurstenden 70 sind in Figur 5 veranschaulicht.

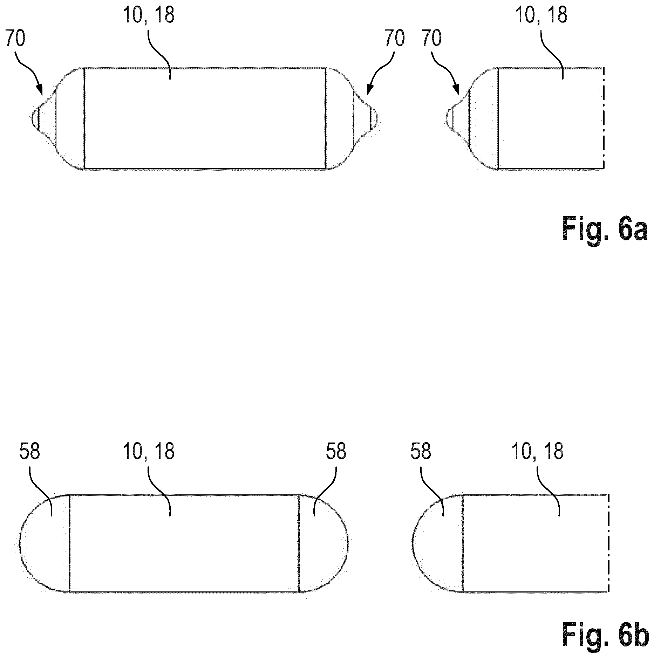

Wie auch in Figur 6a dargestellt ist, bildet sich das betreffende felgenförmige Wurstende 70 unmittelbar nach dem Abtrennen der Würstchen-Portion 10 mittels des erfindungsgemäßen Crimpelements 28 aus. Das Würstchen 10 behält die in Figur 6a bzw. auch in den Figuren 4 und 5 gezeigten felgenförmigen Wurstenden 70 jedoch nicht bei, sondern es bildet sich nach einiger Zeit, insbesondere nach dem Entspannen bzw. Rückströmen der Masse innerhalb der Hülle 18 ein rundes Wurstende 58 aus. Mit anderen Worten wird durch die spezifische Form der Crimpelemente 28, welche eine erfindungsgemäße Wölbung 40 aufweisen, erreicht, dass die Wurstmasse zunächst über die zu erzeugende Form, nämlich die runde Form hinaus verdrängt wird, was schließlich nach Ausgleichsvorgängen innerhalb der Masse die Ausbildung der runden Wurstenden 58 zur Folge hat.

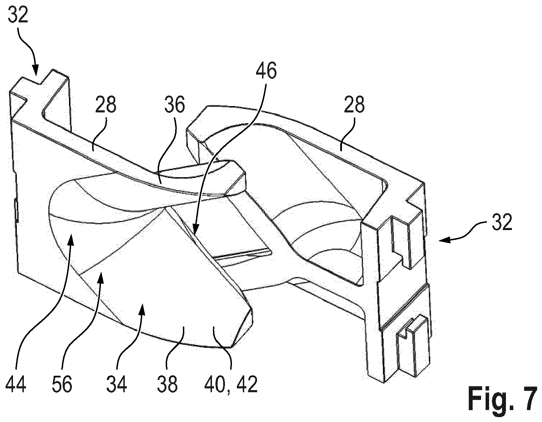

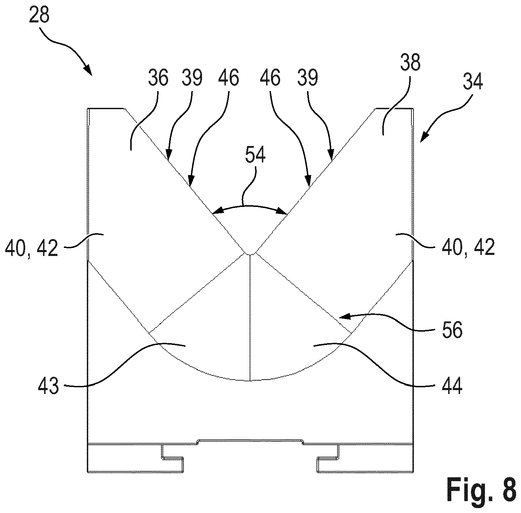

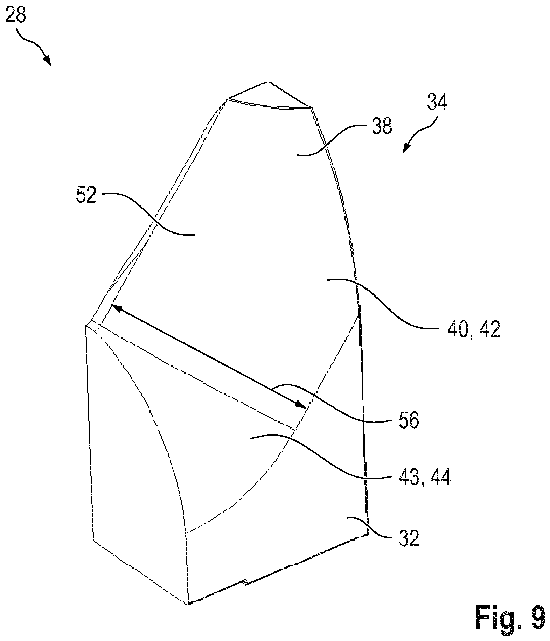

Erfindungsgemäße Crimpelemente 28 sind anhand der Figuren 7 bis 9 detailliert. Das Crimpelement 28 weist einen Befestigungsabschnitt 32 zum Befestigen des Crimpelements 28 an dem Transportelement 22a, 22b auf. Benachbart zu dem Befestigungsabschnitt 32 ist ein Crimpabschnitt 34 angeordnet. Der Crimpabschnitt 34 weist zwei sich ausgehend von einem Grundabschnitt 43 öffnende Schenkel 36, 38 auf. Die Schenkel 36, 38 sind auf ihrer im Betrieb einer dem benachbart angeordneten zweiten Crimpelement 28 abgewandten Seite mit einer Wölbung 40 versehen. Aufgrund der Wölbung 40 wird die gefüllte Hülle 18 unter Verdrängung der Masse in einem Einschnürbereich 30 zunächst eingeschnürt und anschließend durchtrennt. Die Wölbung 40 ist dabei als konvexe Wölbung 42 ausgebildet. Der Grundabschnitt 43 weist ebenfalls eine Wölbung auf, welche insbesondere als konvexe Wölbung ausgebildet ist.

Auf den Innenseiten der Schenkel 39 ist eine Schneide 46 ausgebildet. Der gewölbte Bereich 40 weist eine Dicke 52 in Transportrichtung 6 auf. Darüber hinaus weisen die Schenkel 36, 38 einen Öffnungswinkel 54 auf. Der Übergang 56 zwischen der Wölbung des Grundabschnitts 43 und der Wölbung 40 der Schenkel 36, 38 ist knickfrei ausgebildet.

### Bezugszeichenliste

- 2: Anordnung
- 4: Füllmaschine
- 6: Transportrichtung
- 8: Fülltrichter
- 10: Würstchen-Portion
- 12: Wurststrang
- 14: Portioniervorrichtung
- 16: Trennvorrichtung
- 18: Hülle
- 20: Antrieb
- 22a, 22b: Transportelemente
- 24: Transportbereich
- 26: Rücklaufbereich
- 28: Crimpelement
- 30: Einschnürbereich
- 32: Befestigungsabschnitt
- 34: Crimpabschnitt
- 36, 38: Schenkel
- 39: Schenkelinnenseiten
- 40: gewölbte Ausbildung
- 42: konvexe Wölbung
- 43: Grundabschnitt
- 44: konvexe Wölbung des Grundabschnitts
- 46: Schneide
- 48: Parallelführung
- 50: Aufnahmemittel
- 52: Dicke des gewölbten Abschnitts
- 54: Öffnungswinkel
- 56: Übergang
- 58: Rundes Wurstende
- 60: Umlenkbereich
- 62: Zahnriemenantrieb
- 66, 68: Transportband
- 70: Felgenförmiges Wurstende

## Patentansprüche

1. Trennvorrichtung (16) zum Trennen von Portionen (10) aus mit Lebensmittel-Masse befüllten länglichen Hüllen (18), insbesondere von Würstchen-Portionen (10) aus mit Wurstbrät gefüllten Alginat-Hüllen (18),
mit zwei beabstandet zueinander angeordneten, mittels mindestens eines Antriebs (20) antreibbaren umlaufenden Transportelementen (22a, 22b), die jeweils einen Transportbereich (24) aufweisen, welcher im Betrieb in eine Transportrichtung (6) bewegt wird, und einen Rücklaufbereich (26),
wobei die gefüllte Hülle (18) zwischen die Transportbereiche (24) der beiden Transportelemente (22a, 22b) eingebracht und in Transportrichtung (6) transportiert werden kann,
und wobei die Transportelemente (22a, 22b) derart ausgerichtet sind, dass sich der Abstand zwischen den Transportelementen (22a, 22b) in dem Transportbereich (24) in Richtung der Transportrichtung (6) reduziert,
mindestens einem an jedem Transportelement (22a, 22b) angeordneten seitlich von dem Transportelement (22a, 22b) abstehenden Crimpelement (28),
wobei zwei Crimpelemente der beabstandeten Transportelemente (22a, 22b) so geformt und im Transportbereich (24) nebeneinander angeordnet sind sowie bei Bewegung in die Transportrichtung (6) aufeinander zu bewegt werden,
wobei das Crimpelement (28) einen Befestigungsabschnitt (32) zum Befestigen des Crimpelements (28) an dem Transportelement (22a, 22b) aufweist und einen benachbart zu dem Befestigungsabschnitt (32) angeordneten Crimpabschnitt (34),
wobei der Crimpabschnitt (34) zwei sich ausgehend von einem Grundabschnitt (43) öffnende Schenkel (36, 38) aufweist,
wobei die Schenkel (36, 38) auf ihrer im Betrieb einem benachbart angeordneten zweiten Crimpelement (28) abgewandten Seite gewölbt (40) ausgebildet sind, sodass die gefüllte Hülle (18) unter Verdrängung der Masse in einem Einschnürbereich (30) zunächst eingeschnürt und anschließend durchtrennt wird,
**dadurch gekennzeichnet, dass** die Wölbung (40) als konvexe Wölbung (42) ausgebildet ist.

2. Trennvorrichtung (16) nach Anspruch 1,
**dadurch gekennzeichnet, dass** der Grundabschnitt (43) eine Wölbung aufweist, welche insbesondere als konvexe Wölbung ausgebildet ist.

3. Trennvorrichtung (16) nach einem der vorstehenden Ansprüche,
dadurch, dass auf den Innenseiten (39) der Schenkel (36, 38) eine Schneide (46) ausgebildet ist.

4. Trennvorrichtung (16) nach einem der vorstehenden Ansprüche,
**dadurch gekennzeichnet, dass** das Crimpelement (28) aus einem der folgenden Werkstoffe ausgebildet ist oder daraus besteht:
- Metall
- Polyoxymethylene.

5. Trennvorrichtung (16) nach einem der vorstehenden Ansprüche,
**dadurch gekennzeichnet, dass** die Crimpelemente (28) derart relativ zu den Transportelementen (22a, 22b) ausgerichtet sind, dass die Crimpelemente (28) in dem Transportbereich (24) aneinander angrenzend und parallel zueinander geführt werden.

6. Trennvorrichtung (16) nach einem der vorstehenden Ansprüche,
**dadurch gekennzeichnet, dass** die Transportelemente (22a, 22b) Aufnahmemittel (50) zur Aufnahme der Befestigungsabschnitte (32) der Crimpelemente (28) aufweisen.

7. Trennvorrichtung (16) nach einem der vorstehenden Ansprüche,
**dadurch gekennzeichnet, dass** der gewölbte Bereich (40) eine Dicke (52) in Transportrichtung (6) von 5 mm bis 20 mm aufweist..

8. Trennvorrichtung (16) nach einem der vorstehenden Ansprüche,
**dadurch gekennzeichnet, dass** der Öffnungswinkel (54) zwischen den Schenkeln (36, 38) 15° bis 120° beträgt.

9. Trennvorrichtung (16) nach einem der vorstehenden Ansprüche,
**dadurch gekennzeichnet, dass** der Übergang (56) zwischen der Wölbung des Grundabschnitts (43) und der Wölbung (40) der Schenkel (36, 38) knickfrei ausgebildet ist.

10. Crimpelement (28) für eine Trennvorrichtung (16) zum Trennen von Portionen (10) aus mit Lebensmittel-Masse befüllten, länglichen Hüllen (18), insbesondere von Würstchen (10) aus mit Wurstbrät gefüllten Alginat-Hüllen (18),
welches einen Befestigungsabschnitt (32) zum Befestigen an einem bewegbaren Transportelement (22a, 22b) aufweist und einen benachbart zu dem Befestigungsabschnitt (32) angeordneten Crimpabschnitt (34),
wobei der Crimpabschnitt (34) zwei sich ausgehend von einem Grundabschnitt (43) öffnende Schenkel (36, 38) aufweist,
wobei die Schenkel (36, 38) auf ihrer im Betrieb einem benachbart angeordneten zweiten Crimpelement (28) abgewandten Seite gewölbt ausgebildet sind, sodass die gefüllte Hülle (18) unter Verdrängung der Masse in einem Einschnürbereich (30) zunächst eingeschnürt und anschließend durchtrennt wird,
**dadurch gekennzeichnet, dass** die Wölbung (40) als konvexe Wölbung (42) ausgebildet ist.

11. Crimpelement (28) nach Anspruch 10,
**dadurch gekennzeichnet, dass** das Crimpelement (28) gemäß mindestens einem der kennzeichnenden Merkmale der vorstehenden Ansprüche 2 bis 10 ausgebildet ist.

12. Verfahren zum Ausbilden und Trennen von Portionen (10) aus mit Lebensmittel-Masse befüllten länglichen Hüllen (18), insbesondere von Würstchen (10) aus mit Wurstbrät gefüllten Alginat-Hüllen (18),
bei dem Lebensmittelmasse mittels einer Füllmaschine (4) in die zu befüllende Hülle (18) eingefüllt wird,
die befüllte Hülle (18) mittels einer Trennvorrichtung (16) in eine Transportrichtung (6) transportiert wird,
wobei die befüllte Hülle (18) zwischen zwei antreibbare, umlaufende Transportelemente (22a, 22b) gebracht und mittels zweier benachbart angeordneter, jeweils an einem Transportelement (22a, 22b) angeordneter Crimpelemente (28) in einem Einschnürbereich (30) eingeschnürt und abgetrennt wird,
**dadurch gekennzeichnet, dass** die Crimpelemente (28) derart konvex gewölbt (40) ausgebildet sind, dass die Masse über die zu erzeugende Würstchenform hinaus verdrängt wird, so dass sich nach dem Entspannen bzw. Rückströmen der Masse eine runde Form an den Enden (58) der Würstchen-Portionen (10) ausbildet;
wobei die Trennvorrichtung (16) nach einem der Ansprüche 1 bis 9 ausgebildet ist.

## Claims

1. A separator (16) for separating portions (10) from elongate casings (18) stuffed with food mass, in particular for separating sausages (10) from alginate casings (18) stuffed with sausage meat,
comprising two circulating conveyor members (22a, 22b) spaced apart from one another and drivable by at least one drive means (20), each having a conveying area (24) which in operation is moved in a conveying direction (6), and a return area (26),
wherein the stuffed casing (18) can be introduced between the conveying areas (24) of the two conveyor members (22a, 22b) and conveyed in the conveying direction (6),
and wherein the conveyor members (22a, 22b) are oriented in such a way that the distance between the conveyor members (22a, 22b) in the conveying area (24) decreases in the conveying direction (6),
at least one crimping member (28) arranged on each conveyor member (22a, 22b) and projecting laterally from the conveyor member (22a, 22b),
wherein two crimping members of the spaced-apart conveyor members (22a, 22b) are shaped in such a way and arranged adjacent one another in the conveying area (24), and are moved toward each other when moved in the conveying direction (6),
wherein the crimping member (28) has an attachment portion (32) for attaching the crimping member (28) to the conveyor member (22a, 22b) and a crimping portion (34) arranged adjacent the attachment portion (32),
wherein the crimping portion (34) has two legs (36, 38) that open from a base portion (43), wherein the flanks (36, 38) are curved on their side facing an adjacently arranged second crimping member (28) in operation, such that the stuffed casing (18) is first constricted in a constriction region (30) with displacement of the mass and then severed, **characterized in that** the curvature (40) is in the form of a convex curvature (42).

2. The separator (16) according to claim 1,
**characterized in that** the base portion (43) has a curvature which is in the form of a convex curvature, in particular.

3. The separator (16) according to any one of the preceding claims,
**characterized in that** a cutting edge (46) is formed on the inner sides (39) of the legs (36, 38).

4. The separator (16) according to any one of the preceding claims,
**characterized in that** the crimping member (28) is made of or consists of one of the following materials:
- metal
- polyoxymethylene.

5. The separator (16) according to any one of the preceding claims,
**characterized in that** the crimping members (28) are oriented relative to the conveyor members (22a, 22b) in such a way that the crimping members (28) are guided in the conveying area (24) adjacent and parallel to each other.

6. The separator (16) according to any one of the preceding claims,
**characterized in that** the conveyor members (22a, 22b) have receiving means (50) for receiving the attachment portions (32) of the crimping members (28).

7. The separator (16) according to any one of the preceding claims,
**characterized in that** the curved region (40) has a thickness (52) in the conveying direction (6) of 5 mm to 20 mm..

8. The separator (16) according to any one of the preceding claims,
**characterized in that** the opening angle (54) between the legs (36, 38) is 15° to 120°.

9. The separator (16) according to any one of the preceding claims,
**characterized in that** the transition (56) between the curvature of the base portion (43) and the curvature (40) of the legs (36, 38) is free of creases.

10. A crimping member (28) for a separator (16) for separating portions (10) from elongate casings (18) stuffed with food mass, in particular for separating sausages (10) from alginate casings (18) stuffed with sausage meat,
said crimping member (28) having an attachment portion (32) for attaching it to a movable conveyor member (22a, 22b) and a crimping portion (34) arranged adjacent the attachment portion (32),
wherein the crimping portion (34) has two legs (36, 38) that open from a base portion (43),
wherein the legs (36, 38) are curved on their side facing an adjacently arranged second crimping member (28) in operation, such that the stuffed casing (18) is first constricted in a constriction region (30) with displacement of the mass and then severed,
**characterized in that** the curvature (40) is in the form of a convex curvature (42).

11. The crimping member (28) according to claim 11,
**characterized in that** the crimping member (28) is designed in accordance with at least one of the characterizing features of preceding claims 2 to 10.

12. A method for forming and separating portions (10) from elongate casings (18) stuffed with food mass, in particular for forming and separating sausages (10) from alginate casings (18) stuffed with sausage meat,
in which method food mass is stuffed by means of a stuffing machine (4) into the casing (18) to be stuffed,
the stuffed casing (18) is conveyed in a conveying direction (6) by means of a separator (16),
wherein the stuffed casing (18) is brought between two drivable, circulating conveyor members (22a, 22b) and is constricted and separated in a constriction region (30) by means of two adjacently arranged crimping members (28) each arranged on a conveyor member (22a, 22b),
**characterized in that** the crimping members (28) are convexly curved (40) in such a way that the mass is displaced beyond the sausage shape to be produced, so that a round shape is formed at the ends (58) of the sausage portions (10) after the mass has relaxed or flowed back, wherein the separator (16) is configured according to any one of claims 1 to 9.

## Revendications

1. Dispositif de séparation (16) destiné à séparer des portions (10) de boyaux (18) oblongs remplis de masse alimentaire, en particulier des portions de saucisses (10) de boyaux à base d'alginate (18) remplis de chair à saucisse,
avec deux éléments de transport (22a, 22b) disposés de manière espacée l'un par rapport à l'autre, se déplaçant en périphérie pouvant être entraînés au moyen d'au moins un entraînement (20), qui présentent respectivement une zone de transport (24), laquelle est déplacée dans une direction de transport (6) en fonctionnement, et une zone de retour (26),
dans lequel le boyau (18) rempli peut être introduit entre les zones de transport (24) des deux éléments de transport (22a, 22b) et peut être transporté dans la direction de transport (6),
et dans lequel les éléments de transport (22a, 22b) sont orientés de telle manière que la distance entre les éléments de transport (22a, 22b) dans la zone de transport (24) se réduit en direction de la direction de transport (6),
au moins un élément de sertissage (28) disposé sur chaque élément de transport (22a, 22b), dépassant latéralement de l'élément de transport (22a, 22b),
dans lequel deux éléments de sertissage des éléments de transport (22a, 22b) espacés sont formés de telle sorte et sont disposés côte à côte dans la zone de transport (24) et sont déplacés l'un vers l'autre lors du déplacement dans la direction de transport (6),
dans lequel l'élément de sertissage (28) présente une section de fixation (32) destinée à fixer l'élément de sertissage (28) sur l'élément de transport (22a, 22b) et une section de sertissage (34) disposée de manière adjacente par rapport à la section de fixation (32),
dans lequel la section de sertissage (34) présente deux branches (36, 38) s'ouvrant en partant d'une section de base (43),
dans lequel les branches (36, 38) sont réalisées de manière bombée (40) sur leur côté opposé en fonctionnement à un deuxième élément de sertissage (28) disposé de manière adjacente si bien que le boyau (18) rempli est d'abord resserré dans une zone de resserrement (30) en repoussant la masse puis est sectionné,
**caractérisé en ce que** le bombement (40) est réalisé en tant que bombement convexe (42).

2. Dispositif de séparation (16) selon la revendication 1,
**caractérisé en ce que** la section de base (43) présente un bombement, lequel est réalisé en particulier en tant que bombement convexe.

3. Dispositif de séparation (16) selon l'une quelconque des revendications précédentes,
**caractérisé en ce qu'**un tranchant (46) est réalisé sur les côtés intérieurs (39) des branches (36, 38).

4. Dispositif de séparation (16) selon l'une quelconque des revendications précédentes,
**caractérisé en ce que** l'élément de sertissage (28) est réalisé à partir d'un des matériaux suivants ou est constitué :
- de métal
- de polyoxyméthylène.

5. Dispositif de séparation (16) selon l'une quelconque des revendications précédentes,
**caractérisé en ce que** les éléments de sertissage (28) sont orientés de telle manière par rapport aux éléments de transport (22a, 22b) que les éléments de sertissage (28) sont guidés de manière à se jouxter les uns les autres et de manière parallèle les uns par rapport aux autres dans la zone de transport (24).

6. Dispositif de séparation (16) selon l'une quelconque des revendications précédentes,
**caractérisé en ce que** les éléments de transport (22a, 22b) présentent des moyens de réception (50) destinés à recevoir les sections de fixation (32) des éléments de sertissage (28).

7. Dispositif de séparation (16) selon l'une quelconque des revendications précédentes,
**caractérisé en ce que** la zone bombée (40) présente une épaisseur (52) dans la direction de transport (6) de 5 mm à 20 mm.

8. Dispositif de séparation (16) selon l'une quelconque des revendications précédentes,
**caractérisé en ce que** l'angle d'ouverture (54) entre les branches (36, 38) va de 15° à 120°.

9. Dispositif de séparation (16) selon l'une quelconque des revendications précédentes,
**caractérisé en ce que** la transition (56) entre le bombement de la section de base (43) et le bombement (40) des branches (36, 38) est réalisée sans pli.

10. Elément de sertissage (28) pour un dispositif de séparation (16) destiné à séparer des portions (10) de boyaux (18) oblongs remplis de masse alimentaire, en particulier des saucisses (10) de boyaux à base d'alginate (18) remplis de chair à saucisse,
lequel présente une section de fixation (32) destiné à être fixée sur un élément de transport (22a, 22b) pouvant être déplacé et une section de sertissage (34) disposée de manière adjacente par rapport à la section de fixation (32),
dans lequel la section de sertissage (34) présente deux branches (36, 38) s'ouvrant en partant d'une section de base (43),
dans lequel les branches (36, 38) sont réalisées avec un bombement sur leur côté opposé en fonctionnement à un deuxième élément de sertissage (28) disposé de manière adjacente si bien que le boyau rempli (18) est d'abord resserré dans une zone de resserrement (30) en repoussant la masse puis est sectionné,
**caractérisé en ce que** le bombement (40) est réalisé en tant que bombement convexe (42).

11. Elément de sertissage (28) selon la revendication 10,
**caractérisé en ce que** l'élément de sertissage (28) est réalisé selon au moins l'une des caractéristiques caractérisantes des revendications précédentes 2 à 10.

12. Procédé de réalisation et de séparation de portions (10) de boyaux (18) oblongs remplis de masse alimentaire, en particulier de saucisses (10) de boyaux à base d'alginate (18) remplis de chair à saucisse,
où la masse alimentaire est transvasée dans le boyau (18) à remplir au moyen d'une remplisseuse (4),
le boyau (18) rempli est transporté dans une direction de transport (6) au moyen d'un dispositif de séparation (16),
dans lequel le boyau (18) rempli est amené entre deux éléments de transport (22a, 22b) se déplaçant en périphérie, pouvant être entraînés et sont resserrés et isolés dans une zone de resserrement (30) au moyen de deux éléments de sertissage (28) disposés de manière adjacente, disposés respectivement sur un élément de transport (22a, 22b),
**caractérisé en ce que** les éléments de sertissage (28) sont réalisés avec un bombement convexe (40) de telle manière que la masse est repoussée en dehors en passant par la forme de saucisse à produire de sorte qu'une forme ronde se forme sur les extrémités (58) des portions de saucisse (10) après la détente ou le reflux de la masse ;
dans lequel le dispositif de séparation (16) est réalisé selon l'une quelconque des revendications 1 à 9.
